# EUROPÄISCHE PATENTSCHRIFT

(11) **EP 2 328 507 B1**
(45) Veröffentlichungstag und Bekanntmachung des Hinweises auf die Patenterteilung: **08.08.2012**
(21) Anmeldenummer: 09778043.1
(22) Anmeldetag: 21.08.2009
(51) Int. Cl.: A61C 8/00

(54) **Zahnimplantat**
Dental implant
Implant dentaire

(30) Priorität: 05.09.2008 DE 102008046027
(43) Veröffentlichungstag der Anmeldung: 08.06.2011
(73) Patentinhaber: Riedl, Ludwig, 81375 München (DE)
(72) Erfinder: Riedl, Ludwig, 81375 München (DE)
(74) Vertreter: Müller - Hoffmann & Partner
(86) Internationale Anmeldenummer: PCT/EP2009/006093
(87) Internationale Veröffentlichungsnummer: WO 2010/025839

(56) Entgegenhaltungen:
- WO-A-02/24098
- WO-A-2004/096075
- WO-A-2006/035011
- WO-A-2006/131010
- WO-A-2008/138644
- DE-U1-202007 004 943

## Beschreibung

### GEBIET DER ERFINDUNG

Eine Ausführungsform der vorliegenden Erfindung betrifft ein Kieferimplantat, insbesondere ein Kieferimplantat zum Einschrauben in einen Kieferknochen und zur Aufnahme eines Zahnersatzes und/oder einer anderen zahntechnischen Behandlungseinrichtung.

### HINTERGRUND DER ERFINDUNG

Um auf bequeme Art und Weise eine oder mehrere Lücken in einer Zahnreihe mit Zahnersatz schließen zu können, um Zahnersatz mit einer Mehrzahl von Zähnen - zum Beispiel Brücken oder andere Gebisspartien fixieren zu können und/oder um andere zahntechnische Behandlungseinrichtungen - seien dieser orthopädischer oder chirurgischer Natur - dauerhaft am Kiefer des Menschen anbringen zu können, ist eine Vielzahl so genannter Kieferimplantate vorgeschlagen worden.

Derartige Kieferimplantate bestehen ihrem Wesen nach aus einem Schraubkörper, welcher nach Ausbilden eines Bohrkanals im Kieferknochen in das Bohrloch eingeschraubt wird, und einem Kopf zur eigentlichen Aufnahme der zahntechnischen Behandlungseinrichtung.

Dabei bestehen Probleme dahingehend, dass nicht unter allen Umständen gewährleistet werden kann, dass nach Einbringen des Implantats durch Einschrauben über den Gewindekörper das Implantat und insbesondere der Gewindekörper stabil im Knochen einwächst, ohne dass es zu Abstoßungsreaktionen oder entzündlichen Prozessen kommt. Auch kann bisher nicht gewährleistet werden, dass sofort nach Einbringen eine Weiterbehandlung, zum Beispiel im Sinne des Aufbringens eines Abutments oder eines Zahnersatzes oder eine normale Nutzung des Zahnersatzes möglich Ist. Bisher muss nach dem eigentlichen Einbringen des Implantats eine geraume Zeit im Bereich einiger Monate gewartet werden, bis sich die Anordnung aus Kieferknochen und Implantat nach der Wundheilung und dem Einwachsen mechanisch stabilisiert hat. Dies ist nachteilig, weil bis zu diesem Zeitpunkt Schutzmaßnahmen ergriffen werden müssen, um eine Belastung durch mechanische oder baktertelle Insultien zu vermeiden.

Die DE 20 2007 004 943 U1 beschreibt ein Schraubenimplantat für einen Kieferknochen in einteiliger Form. wobei ein selbst schneidendes Kompressionsgewinde an einem konischen Implantatkörper vorgesehen ist und wobei in einem oberen Krestal eingreifenden Abschnitt des Kompressionsgewindes ein Mikrogewinde vorgesehen ist, an welches sich ein Implantatkopf zur Aufnahme eines Zahnersatzes oder einer Suprakonstruktton befindet. Das schraubenimplantat kann auf Zirkonoxid bestehen.

Die WO 20061035011 A1 beschreibt ein keramisches enosales Zahnimplantat, bei welchem der Implantatkörper mit einem Gewinde ausgebildet ist, welches teilweise konisch verläuft und aber auf dem dem Implantatkopf abgewandten Bereich apikale Einfräsungen schräg zur Längsachse aufweist, welche den Gewindeverlauf unterbrechen und eine Schneidkante oder Schabkante senkrecht zum Verlauf der Gewindekante und Hohlräume zur Aufnahme des mit der Schneidkante oder Schabkante beim Eindrehen abgetragenen Knochenmaterials bilden.

Eine ähnliche Lehre zeigt die WO 2004/096075 A1. Auch hier sind im Bereich des apikalen Endes Ausnehmungen ausgebildet, welche den Verlauf der Gewindekante unterbrechen und Schneidkanten oder Schabkanten sowie Hohlräume zur Aufnahme beim Eindrehen des Implantats abgetragenen Knochenmaterials bilden.

Die WO 02/24098 A2 betrifft eine Implantatanordnung. bei welcher insbesondere neben dem konischen Verlauf des Gewindekörpers die Achse des Gewindes und die Achse des Implantatkopfes zueinander einen von Null verschiedenen Winkel aufweisen können, um der Ausrichtung des Zahnbetts im Kiefer eines Patienten Rechnung tragen zu können.

Die WO 2006/131010 A2 betrifft schließlich ein Dentalimplantat und ein Verfahren zu dessen Herstellung wobei insbesondere auf die Porosität des Oberflächenbereichs des in den Körper einzubringenden Implantatbereichs abgestellt wird.

### ZUSAMMENFASSUNG DER ERFINDUNG

Der Erfindung liegt die Aufgabe zu Grunde, ein Kleferimplantat bereitzustellen, welches auf besonders einfache und zuverlässige Art und Weise in einen Kieferknochen eingebracht werden kann. wobei zeitnah nach dem Setzen des Implantats bereits eine mechanische Stabilität der Anordnung aus Kieferknochen und Implantat erfolgt, somit ebenfalls zeitnah eine Wetterbehandlung möglich wird und ferner Infektionen von extern besonders zuverlässig unterdrückt oder vermieden werden.

Die der Erfindung zu Grunde liegende Aufgabe wird bei einem Kieferimplantat mit den Merkmalen des unabhängigen Patentanspruchs 1 gelöst. Vorteilhafte Weiterbildungen sind Gegenstand der abhängigen Ansprüche.

Die vorliegende Erfindung schafft ein Kieferimplantat mit einem Kopf zur Aufnahme eines Zahnersatzes und/oder einer zahntechnischen Behandlungseinrichtung und mit einem Fuß mit einem Gewinde zum Einschrauben in einen Kieferknochen, welches voll-ständig oder im Wesentlichen vollständig aus Zirkoniumdioxid ZrO₂ ausgebildet ist und bei welchem der Fuß mit dem Gewinde in einer Richtung von einem den Kopf zugewandten Bereich zu einem dem Kopf abgewandten Bereich hin konisch verjüngend ausgebildet ist. Sie ist dadurch gekennzeichnet, dass das Gewinde vollständig oder abschnittsweise eine Gewindekante aufweist, welche nach Art eines Sägezahngewindes ausgebildet ist mit einer nicht radial, insbesondere linear schräg oder konvex bogenförmig zur radialen Richtung, verlaufenden ersten Flanke und einer radial verlaufenden zweiten Flanke für jeden Sägezahn, wobei die erste, nicht radial verlaufende Flanke jeweils in Eindrehrichtung des Gewindes orientiert oder ausgerichtet ist und die zweite, radial verlaufende Flanke jeweils zur Eindrehrichtung des Gewindes entgegen gesetzt orientiert oder ausgerichtet ist.

Durch diese Anordnung wird beim Eindrehen der Knochen sanft verdrängt und gelangt dann durch seine elastischen Eigenschaften in die Zwischenräume zwischen den Sägezähnen zurück. Die radial verlaufenden zweiten Flanken begünstigen den festen Sitz und verhindern dann ein Lockern, indem sie das Herausdrehen erschweren.

Eine der Grundlehren der vorliegenden Erfindung besteht in der Abkehr von einem lang gehegten Vorurteil im Bereich der Implantologie. Bisher ist man nämlich in der Fachwelt der Implantologie der Auffassung, dass Implantate grundsätzlich eine zylindrische Form des Gewindekörpers besitzen sollen, um den Knochen nach dem Vorbohren eines gleich großen Gewindekanals oder einer gleich großen Knochenhöhle während des Eindrehens des Implantats nicht zu komprimieren, um dadurch Knochenschäden zu vermeiden.

Demgegenüber wird jedoch hier dieses Vorurteil überwunden und die Meinung vertreten, dass durch das Vorbohren mit einem geringeren Bohrdurchmesser als dem mittleren oder dem minimalen Durchmesser des Gewindes des Implantats und Eindrehen eines konischen Gewindekörpers der komprimierte Knochen keinen Schaden nimmt, sondern dass damit eine Primärstabilität, eine schnellere Knochenheilung und ein geringeres Infektionsrisiko erreicht werden, insbesondere dann, wenn das Implantat zusätzlich dazu vollständig oder im Wesentlichen vollständig - z.B. bis auf Oberflächenbeschichtungen und/oder Einfärbungen - aus Zirkoniumdioxid ZrO₂ besteht.

Eine Behandlung wird also dadurch begünstigt, dass ein Zirkoniumdioxidmaterial, insbesondere in einteiliger Form, im Zusammenhang mit einem konischen Gewindekörper für Kieferimplantate verwendet wird, wobei in der Anwendung im Kieferknochen eine Vorbohrung mit einem Durchmesser erfolgt, welcher dem minimalen Durchmesser des Implantatgewindes entspricht. Es werden also auf diese Art und Weise über die Konizität des Gewindekörpers geometrische Vorteile mit den positiven materialspezifischen Gegebenheiten und der Einteiligkeit des Implantats als solchem kombinierbar.

Dadurch ergeben sich weitere Vorteile im Hinblick auf die mechanische Stabilität des Gefüges aus Implantat und Kieferknochen gleich nach der Primärbehandlung, ohne dass Kompromisse eingegangen werden, zum Beispiel im Hinblick auf für übliche Implantate notwendige Wartezeiten von 4 bis 6 Monaten für eine Ausheilung, so dass auch die herkömmlicherweise notwendigen Schutzmaßnahmen über Provisorien oder dergleichen, um nämlich mechanische Belastungen und das Eindringen von Bakterien zu vermeiden, entfallen können

Mit der konischen Form des Zirkoniumdioxidimplantatkörpers können also die bisher notwendigen Kompromisse umgangen werden, und es werden dabei sowohl eine Primärstabilität und auch eine schnellere Knochenheilung erreicht.

Diese und weitere Aspekte werden auf der Grundlage der beigefügten Zeichnungen erläutert.

### KURZBERSCHREIBUNG DER FIGUREN

- **Fig. 1 - 4**: sind schematische und geschnittene Seitenansichten von Ausführungsformen des Kieferimplantats, wobei unterschiedliche Kombinationen aus Schulterbereich und Kopfbereich vorgesehen sind.
- **Fig. 5**: ist eine schematische und geschnittene Seitenansicht einer Ausführungsform des Kieferimplantats, bei welchem der Fuß aus verschiedenen Fußabschnitten mit verschiedenen Gewindeabschnitten besteht.
- **Fig. 6**: zeigt in schematischer und geschnittener Seitenansicht die Anwendung einer Ausführungsform des Kieferimplantats zur Fixierung von Zahnersatz in einem Kieferknochen.
- **Fig. 7**: zeigt in schematischer und geschnittener Seitenansicht eine Ausführungsform des Kieferimplantats, bei welchem die Symmetrieachsen von Fuß und Kopf einen von 0° verschiedenen Winkel miteinander einschließen.
- **Fig. 8**: zeigt eine schematische Querschnittansicht des Fußes einer nicht zur beanspruchten Erfindung gehörigen Ausführungsform des Kieferimplantats mit einer ondulierten Gewindekante.
- **Fig. 9**: zeigt eine schematische Querschnittansicht des Fußes des erfindungsgemäßen Kieferimplantats mit einer sägezahnförmigen Gewindekante.
- **Fig. 10**: zeigt in schematischer und geschnittener Seitenansicht eine Ausführungsform des Kieferimplantats, bei welchem der Kopf eine Kugelform besitzt.

### DETAILBESCHREIBUNG DER AUSFÜHRUNGSFORMEN

Nachfolgend werden Ausführungsformen der vorliegenden Erfindung beschreiben.

Strukturell und/oder funktionell gleiche, ähnliche oder gleich wirkende Merkmale oder Elemente werden nachfolgend im Zusammenhang mit den Figuren mit denselben Bezugszeichen bezeichnet. Nicht in jedem Fall wird eine detallierte Beschreibung dieser Merkmale oder Elemente wiederholt.

Zunächst wird auf die Zeichnungen im allgemeinen Bezug genommen.

Gemäß einer Ausführungsform der vorliegenden Erfindung wird ein Kieferimplantat 1 vorgestellt mit einem Kopf 11 zur Aufnahme eines Zahnersatzes 40 und/oder einer zahntechnischen Behandlungseinrichtung und mit einem Fuß 13, mit einem Gewinde G, G1-3 zum Einschrauben in einen Kieferknochen 20, welches vollständig oder im Wesentlichen vollständig aus Zirkoniumdioxid ZrO₂ ausgebildet ist und bei welchem der Fuß 13 mit dem Gewinde G, G 1-3 in einer Richtung von einem den Kopf 11 zugewandten Bereich 13p zu einem dem Kopf 11 abgewandten Bereich 13d hin konisch verjüngend ausgebildet ist.

Das Kieferimplantat kann einteilig oder einstückig ausgebildet sein.

Der Fuß 13 kann eine Länge h3 im Bereich von etwa 8 mm bis etwa 20 mm aufweisen.

Der Fuß 13 kann in dem dem Kopf 11 zugewandten Bereich 13p eine Breite oder einen Durchmesser b31 im Bereich von etwa 3 mm bis 5 mm aufweisen, insbesondere einen Wert von 3,1 mm, von 3,7 mm, von 4,1 mm oder von 5,0 mm,

Alternativ oder zusätzlich kann der Fuß 13 in dem dem Kopf 11 abgewandten Bereich 13d eine Breite oder einen Durchmesser b32 im Bereich von etwa 1,6 mm bis etwa 2,5 mm aufweisen.

Das Gewinde G, G1-3 kann eine Steigung aufweisen im Bereich von etwa 0,53 Windungen/mm bis etwa 0,77 Windungen/mm, vorzugsweise im Bereich von etwa 0,61 Windungen/mm bis etwa 0,7 Windungen/mm.

Der Fuß 13 und/oder das Gewinde G, G-3 können eine vorgegebene und insbesondere erhöhte Rauhigkeit aufweisen.

Der Fuß 13 und/oder das Gewinde G, G1-3 können eine durch Sandstrahlen, insbesondere mit Zirkoniumdioxidsand einer vorgegebenen Korngröße, behandelte Oberfläche aufweisen.

Der Fuß 13 und/oder das Gewinde G, G1-3 können auf deren Zirkoniumdioxidgrundmaterial an der Oberfläche eine Beschichtung aufweisen, insbesondere eine Beschichtung mit oder aus mindestens einer Substanz aus der Gruppe, die gebildet wird von Polymeren, Silikaten, Metallen, Metalloxiden, Proteinen, Eigenproteinen oder deren Derivaten, Eigenblut oder dessen Komponenten oder Derivaten.

Der Fuß 13 und/oder das Gewinde G können mit einer Mehrzahl Fußabschnitte 13-1, 13-2, 13-3 bzw. mit einer Mehrzahl, vorzugsweise unterschiedlicher Gewindeabschnitte G1, G2, G3 des Gewindes G ausgebildet sein.

Das Gewinde G weist vollständig oder abschnittsweise eine Gewindekante Gk auf, welche nach Art eines Sägezahngewindes ausgebildet ist.

Das Gewinde G weist vollständig oder abschnittsweise eine Gewindekante Gk auf, welche nach Art eines Sägezahngewindes ausgebildet ist mit einer nicht radial, insbesondere linear schräg oder konvex bogenförmig zur radialen Richtung, verlaufenden ersten Flanke F1 und einer radial verlaufenden zweiten Flanke F2 für jeden zahn, wobei die erste, nicht radial verlaufende Flanke F1 jeweils in Eindrehrichtung des Gewindes G orientiert oder ausgerichtet ist und die zweite, radial verlaufende Flanke F2 jeweils zur Eindrehrichtung des Gewindes G entgegen gesetzt orientiert oder ausgerichtet ist.

Das Gewinde G kann pro Windung vier bis acht Zähne aufweisen.

Der Fuß 13 kann linear oder im Wesentlichen linear ausgebildet sein, insbesondere nach Art eines Kegelstumpfes, vorzugsweise mit kreisförmiger Grundfläche und/oder mit einer Symmetrieachse X, welche mit der Längsachse des Kegelstumpfes zusammenfällt.

Der Kopf 11 kann nach Art eines Zylinders oder eines Kegelstumpfes - vorzugsweise in senkrechter Art und Weise auf der Grundlage einer kreisförmigen oder elliptischen Grundfläche - oder nach Art eines Pyramidenstumpfes - vorzugsweise in senkrechter Art und Weise auf der Grundlage eines Polygons, vorzugsweise eines Rechtecks oder Quadrats - ausgebildet sein.

Alternativ dazu kann der Kopf 11 nach Art einer Kugel oder eines Kugelabschnitts, vorzugsweise größer als eine Halbkugel ausgebildet sein, insbesondere zur Aufnahme von Rententionshülsen und/oder mit einem Kugeldurchmesser im Bereich von etwa 2 mm.

Der Kopf 11 kann eine Höhe oder Länge h 1 aufweisen im Bereich von etwa 5 mm bis etwa 8 mm, vorzugsweise im Bereich von etwa 7 mm.

Der Kopf 11 kann in einem dem Fuß 13 zugewandten Bereich 11p einen Durchmesser oder eine Breite b12 aufweisen im Bereich von 4 mm.

Alternativ oder zusätzlich kann der Kopf 11 in einem dem Fuß 13 abgewandeten Bereich 11d einen Durchmesser oder eine Breite aufweisen im Bereich von 3 mm.

Der Kopf 11 kann eine Symmetrieachse Y aufweisen, die mit seiner Längsachse zusammenfällt.

Der Kopf 11 und der Fuß 13 können Erstreckungsachsen, Längsachsen oder Symmetrieachsen X, Y aufweisen, die zusammenfallen. Sie können aber alternativ auch einen Winkel im Bereich von etwa 3° bis etwa 30° einschließen.

Der Kopf 11 kann präparierbar ausgebildet sein, um in seiner geometrischen Ausgestaltung an die Aufnahme des Zahnersatzes, an die Aufnahme einer anderen zahntechnischen Behandlungseinrichtung und/oder an die anatomischen Gegebenheiten eines Kieferknochens 20 oder einer Mundhöhle anpassbar zu sein.

Der Kopf 11 kann ein oder mehrere plane oder planare Flächenabschnitte, Angriffsflächen und/oder Angriffspunkte oder -kanten und/oder Einkerbungen aufweisen, die dem Eingreifen und der Kooperation mit einem Eindrehwerkzeug zum Eindrehen des Implantats 1 in den Kieferknochen 20 dienen.

Der Kopf 11 kann abschnittsweise oder vollständig eine Oberfläche mit einer vordefinierten Rauhigkeit aufweisen, insbesondere auf der Grundlage eines 200er-Feinschliffs.

Zwischen dem Kopf 11 und dem Fuß 13 kann eine Schulter 12 vorgesehen sein.

In dem Fall, dass der Kopf 11 als Kugelabschnitt ausgebildet ist, kann es vorteilhaft sein, wenn zwischen dem Kopf 11 und der Schulter 12 ein Hals oder Halsbereich 14 vorgesehen ist, bei welchem ein oder mehrere Flächenabschnitte, Angriffsflächen, Angriffspunkte oder -kanten und/oder Einkerbungen ausgebildet sind, die dem Eingreifen und der Kooperation mit einem Eindrehwerkzeug zum Eindrehen in den Kieferknochen 20 dienen, insbesondere nach Art eines Prismas auf der Grundlage eines gleichförmigen Sechsecks als Grundfläche oder nach Art eines Sechskants.

Die Schulter 12 kann in einen dem Kopf 11 zugewandten Bereich einen Durchmesser oder eine Breite b21 aufweisen, welche größer ist als der Durchmesser oder die Breite b12 des Kopfes 11 in dem dem Fuß 13 zugewandten Bereich und/oder größer als der Durchmesser oder die Breite b31 des Fußes 13 in dem dem Kopf 11 zugewandeten Bereich 13p, so das gilt b21>b12 und b21>b31, insbesondere um einen Wert in einem Bereich von 25 % bis etwa 66 %, vorzugsweise in einem Bereich von etwa 30 % bis etwa 40 % oder vorzugsweise in einem Bereich von 0,5 mm bis etwa 1,5 mm auf jeder Seite, weiter vorzugsweise in einem Bereich von etwa 1 mm auf jeder Seite.

Die Schulter 12 kann eine Oberfläche aufweisen, die teilweise oder vollständig poliert ausgebildet ist.

Die Schulter 12 kann präparierbar ausgebildet sein, um in seiner geometrischen Ausgestaltung an die Aufnahme des Zahnersatzes, an die Aufnahme einer anderen zahntechnischen Behandlungseinrichtung und/oder an die anatomischen Gegebenheiten eines Kieferknochens 20 oder einer Mundhöhle anpassbar zu sein.

Die Schulter 12 kann eine Länge oder Höhe h2 aufweisen mit einen Wert im Bereich von etwa 2 mm.

Die Schulter 12 kann nach Art eines Tellers, einer Halbkugel, eines halben Ellipsoids, eines Kugelabschnitts eines Kegelstumpfs oder eines Pyramidenstumpfs ausgebildet sein.

Der Fuß 13 kann vorangehend und nachfolgend auch immer als Fußbereich, Fußabschnitt oder als enossaler Bereich des Kieferimplantats 1 bezeichnet werden. Der Kopf 11 kann vorangehend und nachfolgend auch immer als Kopfbereich, Kopfteil oder Kopfabschnitt bezeichnet werden. Die Schulter 12 kann auch als Schulterbereich, Schulterteil oder Schulterabschnitt bezeichnet werden. Das Kieferimplantat 1 kann der Einfachheit halber vorangehend und nachfolgend auch immer als Implantat bezeichnet werden.

Aus kosmetischen Gründen kann es von Vorteil sein, dass der Kopf 11, der Fuß 13, ggf. und besonders die Schulter 12 und/oder ggf. der Hals 14 einfärbbar oder eingefärbt ausgebildet sind, insbesondere mit einer Zahnfarbe, bevorzugt abgestimmt auf die Zahnumgebung, in welche das Kieferimplantat 1 einzusetzen ist. Dann nämlich gliedert sich der Zahnersatz nach Setzen des Implantats optisch harmonisch in das Zahngefüge ein, auch wenn das das Implantat umgebene Zahnfleisch nur dünn, also teiltransparent ausgebildet sein sollte.

Nun wird im Detail auf die Zeichnungen Bezug genommen.

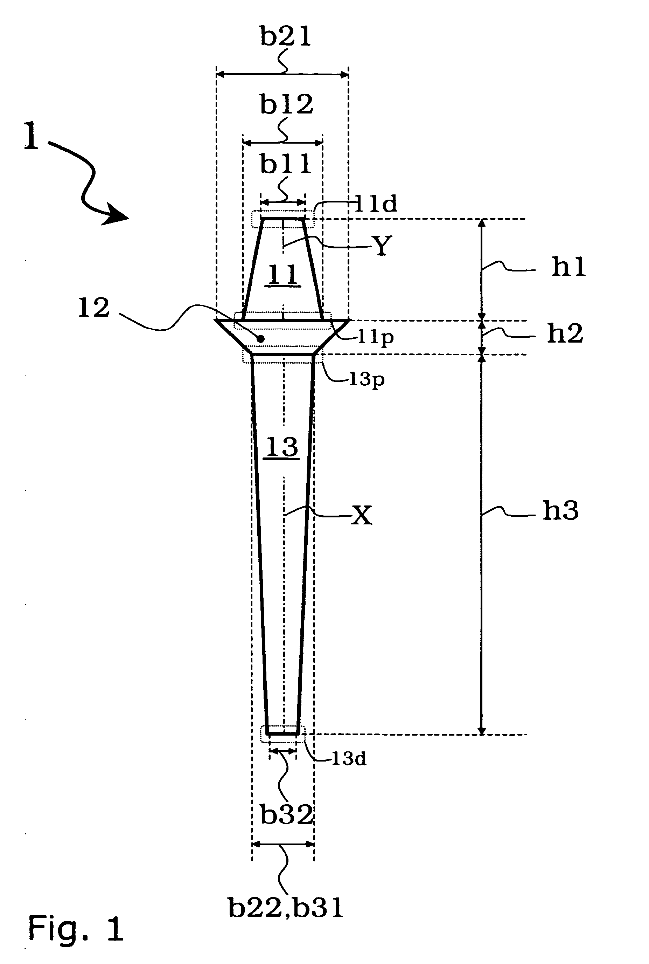

Fig. 1 zeigt in geschnittener Seitenansicht eine erste Ausführungsform des Kieferimplantats 1. Bei dieser Ausführungsform ist zwischen einem Fuß 13 mit einem Gewindebereich G und einem Kopf 11 zur Aufnahme eines Zahnersatzes oder eines anderen zahntechnischen Behandlungsmittels eine Schulter 12 vorgesehen. Der Kopf 11, die Schulter 12 und der Fuß 13 besitzen jeweils eine Länge h1, h2 bzw. h3, welche jeweils gemäß den jeweiligen Anforderungen ausgelegt werden.

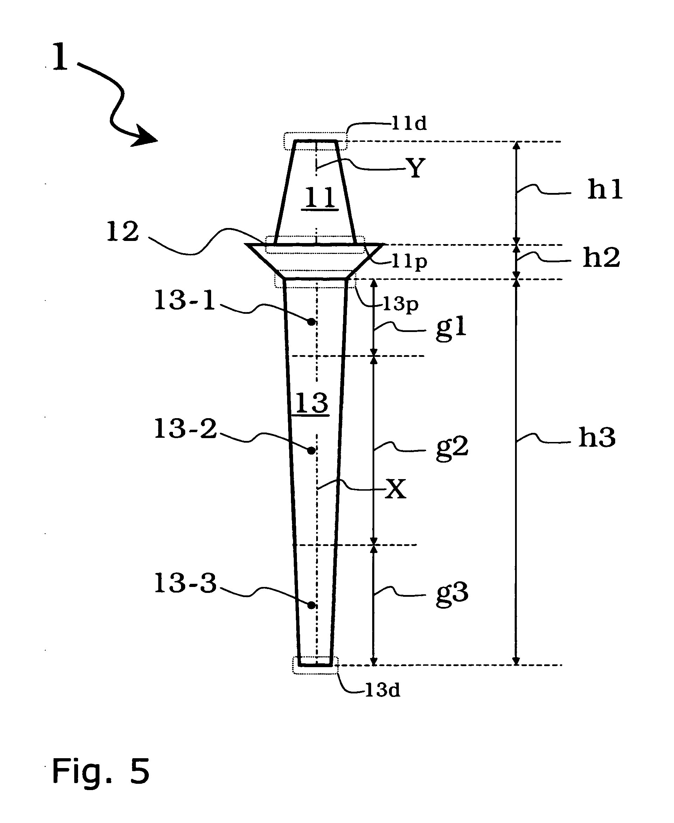

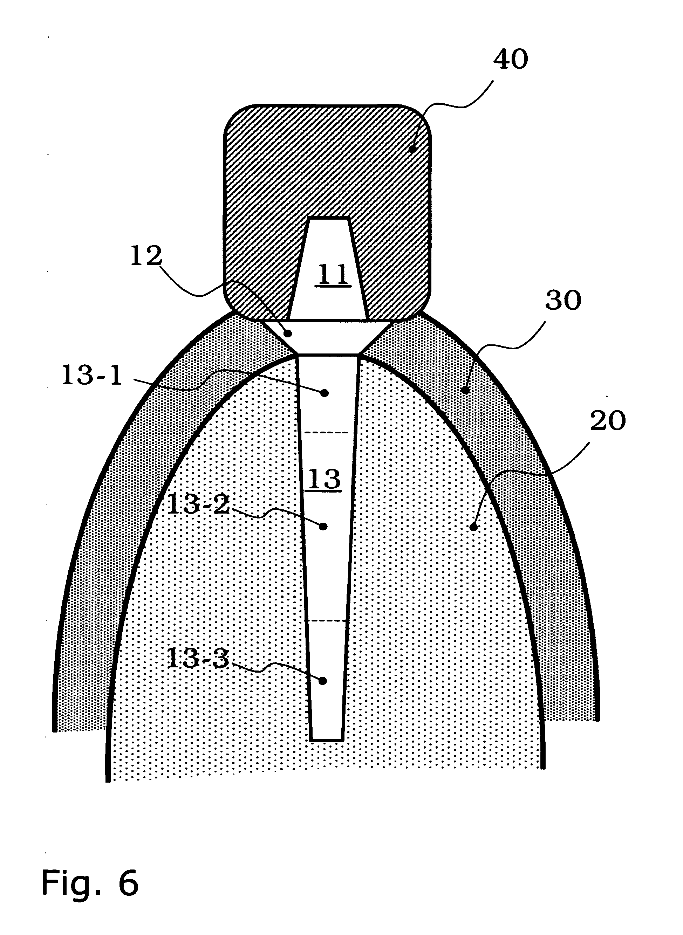

Der Fuß 13 kann mehrere Abschnitte 13-1, 13-2, 13-3 besitzen, wie des im Zusammenhang mit den Fig. 5 und 6 im Detail beschrieben wird. Der Fuß 13 ist im Wesentlichen linear ausgebildet, und zwar insbesondere mit einer Längsachse oder Symmetrieachse X. Er hat im Querschnitt, also in einer Ebene senkrecht zur Zeichenebene Kreisform und ist somit kegelstumpfförmig ausgebildet, wobei sich das schmalere und vom Kopf 11 abgewandete Ende 13d, welches auch als distales Ende oder als distaler Bereich 13d bezeichnet wird, in der Anwendung als erstes in den Kieferknochen 20 (siehe Fig. 6) hinein erstreckt und eine Breite b32 besitzt. Das dem Kopf zugewandte Ende 13p des Fußes 13, welches auch als proximales Ende oder als proximaler Bereich 13p bezeichnet wird, besitzt eine Breite b31, wobei b31 > b32 gilt. Auf der Mantelfläche oder Umfangsfläche des Fußes 13 ist eine Gewinde G mit einem oder mit mehreren Gewindeabschnitten G1 bis G3 (siehe Fig. 5 und 6) ausgebildet. Dieses Gewinde G oder die Gewindeabschnitte G1, G2, G3 können jeweils gleichförmig oder auch mit unterschiedlichem Gewindeverlauf ausgebildet sein.

An das breitere Ende 13p des Fußes 13, also an den proximalen Abschnitt 13p schließt sich die Schulter 12 an. Diese hat in ihrem unteren Bereich eine Breite b22, die in etwa der Breite b31 des proximalen Endes 13p des Fußes 13 entspricht, und weitet sich dann in Richtung auf den Kopf 11 zur Breite b21 auf. Diese Breite b21 im oberen Bereich der Schulter 12 ist bei dieser Ausführungsform deutlich größer gewählt als die maximale Breite b31 des Fußes 13 und auch als die maximale, nämlich untere Breite b 12 des Kopfes 11. Dies dient dazu, um eine bessere Anpassung des Implantats im Übergang von Knochen, Zahnfleisch in die Mundhöhle hinein zu realisieren und um ein verbessertes Abstützen und damit ein verbessertes mechanisches Haltern des später aufzubringenden Zahnersatzes oder Abutments oder eines weiteren zahntechnischen Behandlungsmittels zu gewährleisten. Die in der Fig. 1 dargestellte Form der Schulter 12 kann auch als Rohform der Schulter 12 aufgefasst werden, die dann - entweder vor oder nach Einbringen des Implantats in den Kieferknochen - noch in ihrer Form an die anatomischen und geometrischen Gegebenheiten im Kiefer und in der Mundhöhle des Patienten und in Bezug auf die aufzubringende zahntechnische Behandlungseinrichtung angepasst werden kann, zum Beispiel durch Fräsen oder Schleifen oder dergleichen.

In der Fig. 1 ist die Schulter 12 im Querschnitt mit Trapezform dargestellt. Folglich kann die Schulter 12 in Draufsicht, also in einer Sicht auf eine Ebene senkrecht zur Zeichenebene eine Kreisform eine elliptische Form oder eine Polygonform besitzen, so dass insgesamt verschiedene räumliche Ausgestaltungsmöglichkeiten für die Schulter 12 denkbar sind. Es kann zum Beispiel an einen Abschnitt oder Ausschnitt einer Kugel oder eines Ellipsoids, an Pyramidenstümpfe oder Prismenstümpfe gedacht werden.

Der Kopf 11 schließlich dient der eigentlichen Aufnahme des Zahnersatzes oder des weiteren zahntechnischen Behandlungsmittels und besitzt an seinem dem Fuß 13 zugewandten unteren oder proximalen Ende oder Bereich 11p eine Breite b 12 und in dem dem Fuß 13 abgewandten oberen oder distalen Bereich oder Abschnitt 11d eine Breite b11, wobei bei dieser Ausführungsform des Kieferimplantats 1 b12 > b11 gilt. Im Querschnitt besitzt der Kopf 11 ebenfalls eine Trapezform, so dass bei der Schulter 12 verschiedene räumliche Ausgestaltungsmöglichkeiten denkbar sind, nämlich Abschnitte oder Ausschnitte einer Kugel oder eines Ellipsoids, Pyramiden- oder Prismenstümpfe. Auch der Kopf 11 kann in der in Fig. 1 dargestellten Ausführungsform als in Rohform ausgebildet aufgefasst werden, so dass vor oder nach dem Einsetzen in den Kieferknochen noch eine Anpassung der dreidimensionalen Ausgestaltung denkbar ist. Der Kopf 11 besitzt ebenfalls im Wesentlichen eine lineare Ausdehnung mit einer Längsachse oder Symmetrieachse Y.

Bei der Ausführungsform der Fig. 1 sind die Längsachsen oder Symmetrieachsen X und Y des Fußes 13 bzw. des Kopfes 11 kollinear zueinander angeordnet, das heißt parallel und in einer Linie verlaufend. Denkbar sind jedoch auch Ausführungsformen, bei denen die Symmetrieachsen X und Y des Fußes 13 des Kopfes 1 1 einen von Null verschiedenen Winkel α miteinander einschließen.

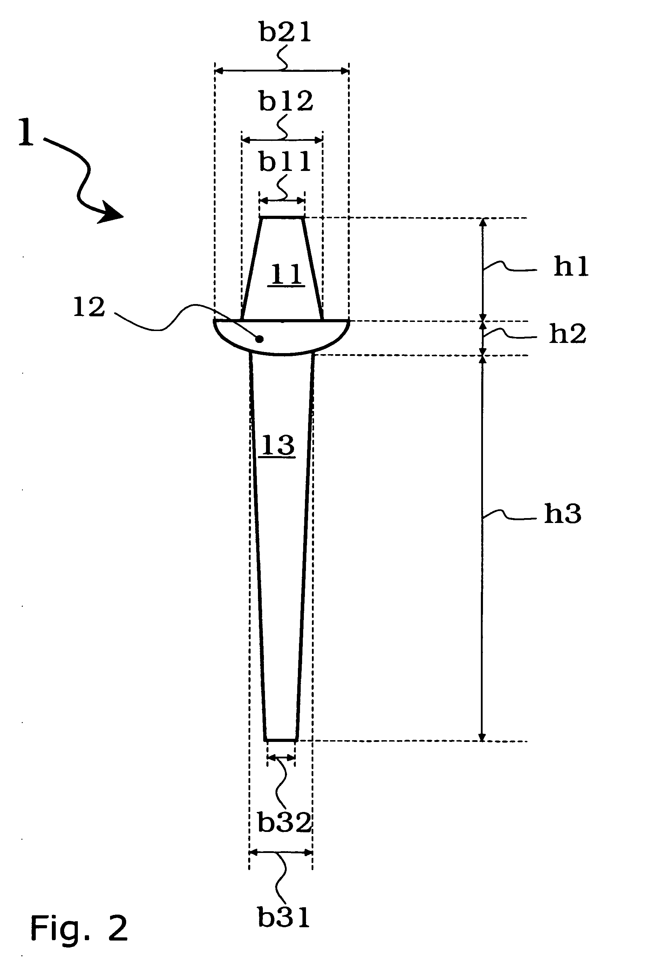

Fig. 2 zeigt ebenfalls in schematischer Form eine geschnittene Seitenansicht einer Ausführungsform des Kieferimplantats 1. Bei dieser Ausführungsform besteht im Vergleich zur Ausführungsform der Fig. 1 ein Unterschied dahingehend, dass die Schulter 12 aufgrund ihrer abgerundeten Unterseite in der räumlichen Darstellung als Abschnitt oder Segment einer Kugel oder eines Ellipsoids gewählt ist und zwar mit planarer Oberseite.

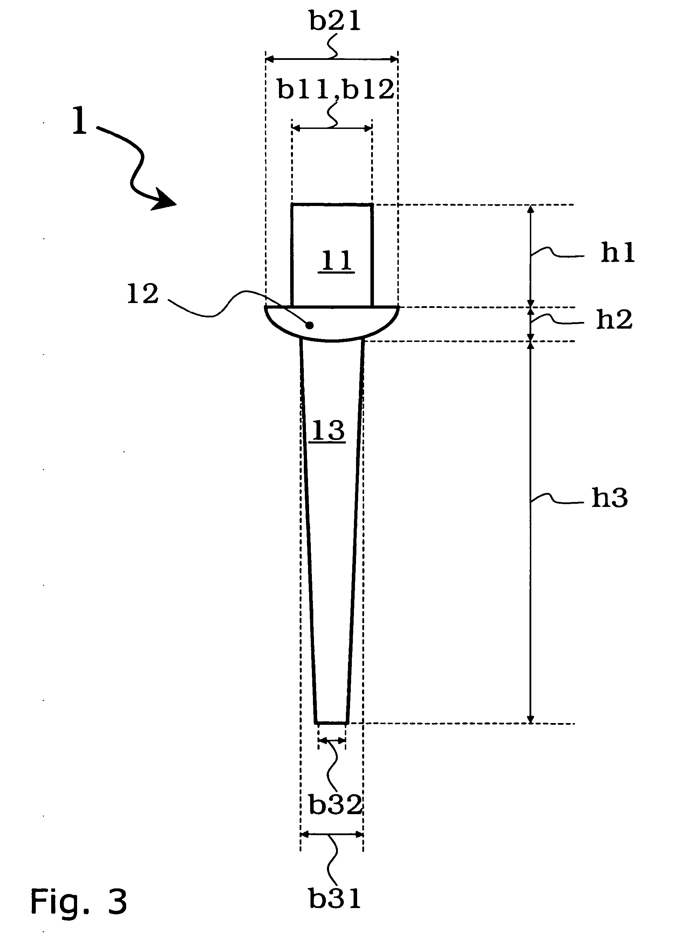

Bei der Ausführungsform, welche ebenfalls in schematischer und geschnittener Seitenansicht in Fig. 3 dargestellt ist, ist zusätzlich dazu der Kopf 11 mit einem Querschnitt mit Rechteckform ausgebildet, so dass sich für den Kopf 11 hier in dreidimensionaler Darstellung ein Quader, ein Zylinder oder ein senkrechtes polygonales Prisma ergibt.

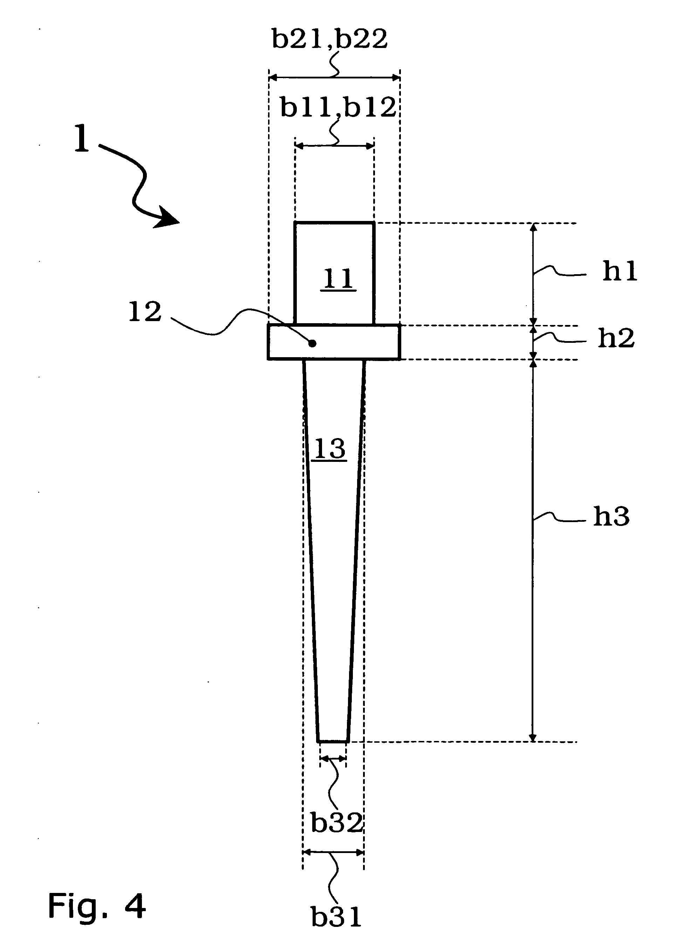

Bei der in Fig. 4 in schematischer und geschnittener Seitenansicht gezeigten Ausführungsform des Kieferimplantats 1 ist gegenüber der Ausführungsform aus Fig. 3 die Schulter 12 mit einem rechteckigen seitlichen Querschnitt ausgebildet, so dass sich in der räumlichen Darstellung ein Zylinder in abgeflachter Form, also letztlich eine tellerartige Schulter 12 als Beispiel ergibt.

Die Fig. 5 zeigt die Ausführungsform aus Fig. 1, wobei hier der Fuß 13 mit ersten bis dritten Fußabschnitten 13-1 bis 13-3 ausgebildet ist, wobei jeder der Abschnitte 13-1 bis 13-3 eine geeignet gewählte Länge g1, g2 bzw. g3 und gegebenenfalls ein spezifisch gewähltes Gewinde G1, G2 bzw. G3 besitzt. Tatsächlich können die Gewindeabschnitte G1 bis G3 gleich oder unterschiedlich gewählt werden, insbesondere um bestimmte den Ausheilungsvorgang und Einwachsungsprozess im Kieferknochen zu begünstigen, die mechanische Stabilität zu steigern und das Infiltrieren von Bakterien von außen aus der Mundhöhle zu unterdrücken oder zu vermeiden.

Die Fig. 6 zeigt ebenfalls in schematischer und geschnittener Seitenansicht eine Ausführungsform des Kieferimplantats 1, welches in einen Kieferknochen 20 eingebracht ist. Idealerweise sitzt der Fuß 13 vollständig im Kieferknochen 20. Das bedeutet, dass der Kieferknochen 20 mit der oberen Kante des proximalen Endes 13p des Fußes 13 und somit mit der Unterkante der Schulter 12 abschließt. Denkbar ist auch, dass das Implantat 1 weiter in den Kieferknochen 20 eingedreht wird, so dass die sich konisch aufweitenden Flanken der Schulter 12 stärker in den Kieferknochen 20 einprägen, um dadurch das Infiltrieren durch Bakterien von extern weiter zu unterdrücken. Beachtet werden jedoch muss dabei, dass aufgrund der sich aufweitenden Seitenflächen der Schulter 12 auch eine gesteigerte Auflagefläche der Schulter 12 auf dem Kieferknochen 20 vorliegt.

Der Kopf 11 des Implantats 1 ist hier in ein Zahnersatzelement 40 eingebracht, wobei letzteres sich mechanisch auf der Oberseite der Schulter 12 abstützt.

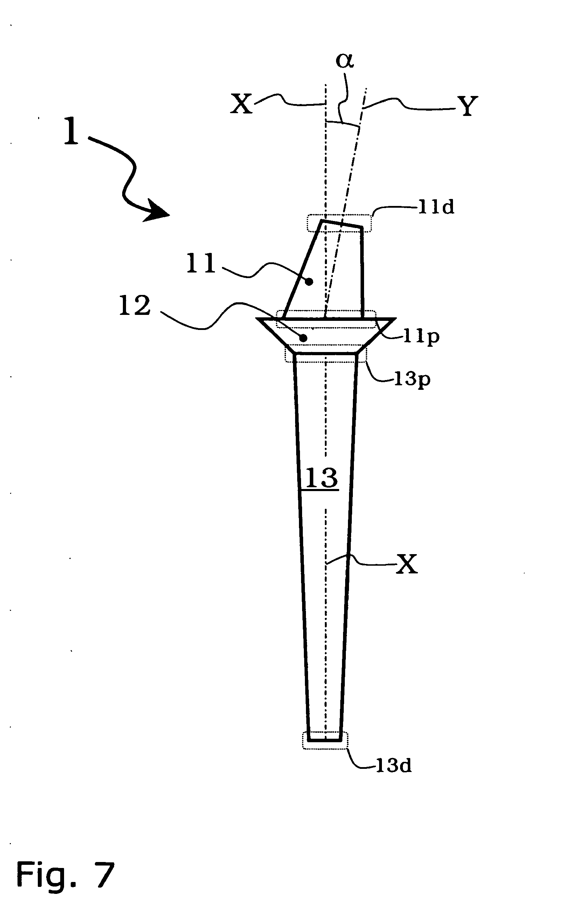

Die Fig. 7 zeigt die Ausführungsform des Kieferimplantats 1 aus Fig. 1, wobei jedoch die Längsachsen oder Symmetrieachsen X und Y des Fußes 13 bzw. des Kopfes 11 einen von Null verschiedenen Winkel α miteinander einschließen. Ein derartiges Ausgestalten kann sinnvoll sein, wenn der Kieferknochen, in welchem der Bohrkanal eingebracht und das Gewinde G des Fußes 13 eingedreht werden, im Querschnitt quasi in einer anderen Richtung verläuft als die Ausrichtung der Zähne. Die Symmetrieachse X wird in einem derartigen Fall der Ausrichtung des Kieferknochens im Querschnitt folgen, wogegen die Symmetrieachse Y des Kopfes 11 im Wesentlichen der Ausrichtung der Zähne folgt.

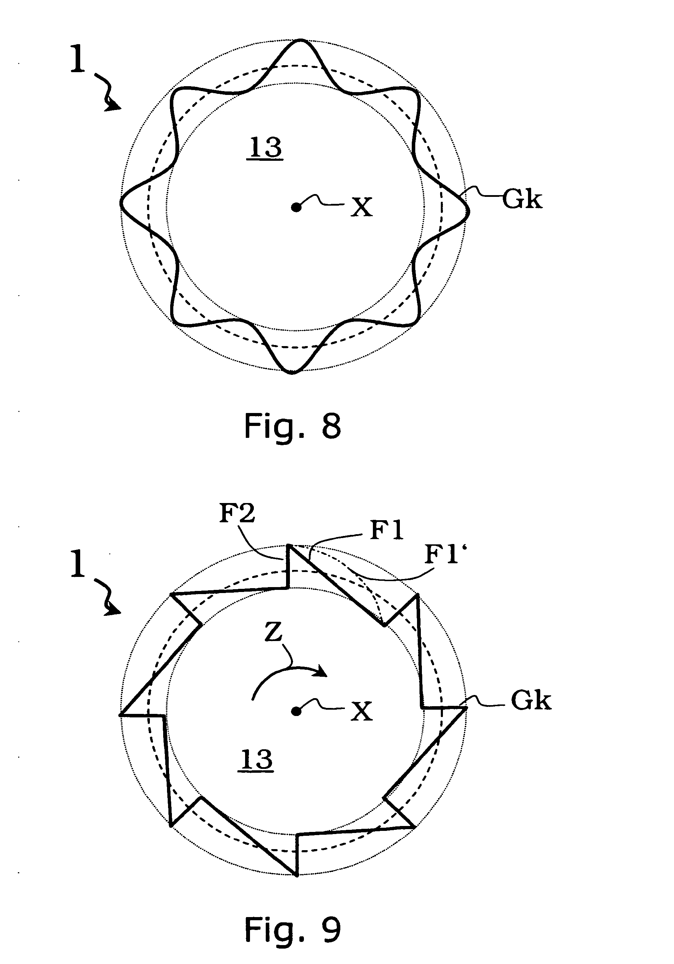

Die Fig. 8 zeigt eine schematische, wicht zur beanspruchten Erfindung gehörige Draufsicht auf eine Schnittebene senkrecht zur Symmetrieachse oder Längsachse X eines Fußbereichs 13. Gestrichelt dargestellt ist dabei der gemittelte Umfang des Querschnitts des Fußes 13. Die durchgezogene Linie erscheint onduliert und spiegelt den Verlauf der Gewindekante Gk wieder. Bei den bisher beschriebenen Gewindeverläufen würde die Gewindekante Gk dem Verlauf des Umfangs im Querschnitt strikt folgen, würde also mit der gestrichelten Linie zusammenfallen. Bei der in Fig. 8 dargestellten Ausführungsform ist die Gewindekante Gk aber onduliert ausgeführt, also nach Form eines Wellenschliffs oder Sägeblatts. Auf diese Art und Weise ist es bei der Applikation des Kieferimplantats 1 im Kieferknochen 20 möglich, die elastischen Eigenschaften des Knochenmaterials auszunutzen, so dass nach dem Festdrehen das Knochenmaterial in die Täler des Wellenschliffs zurück eindringt und die Zähne des Gewindes G quasi als Widerhaken oder Widerstand gegen ein Lockern des eingebrachten Implantats 1 im Kieferknochen 20 fungieren.

Bei der erfindungsgemäßen Ausführungsform der Fig. 9 - gezeigt ist wieder eine schematische Draufsicht auf eine Schnittebene senkrecht zur Symmetrieachse oder Längsachse X eines Fußbereichs 13, und zwar aus Richtung des Kopfes 11 - ist die Gewindekante Gk des Gewindes G des Fußes 13 mit einem Sägezahnverlauf ausgebildet, d.h. jede Ondulation bildet einen Sägezahn mit einer ersten, nicht radial verlaufenden ersten Flanke F1, F1' und einer radial verlaufenden zweiten Flanke F2. Die erste, nicht radial verlaufende Flanke F1, F1' ist in der Eindrehrichtung Z (hier rechtsdrehendes Gewinde G vom Kopf 11 aus betrachtet) des Implantats 1 ausgerichtet oder orientiert, die zweite, radiale verlaufende Flanke F2 ist der Eindrehrichtung Z des Implantats 1 entgegen gesetzt ausgerichtet. Durch diese Anordnung wird beim Eindrehen der Knochen sanft verdrängt, mit einer nur geringen oder mit keiner Beschäftigung durch eine Sägewirkung der Sägezähne, und gelangt dann durch seine elastischen Eigenschaften in die Zwischenräume zwischen den Sägezähnen zurück. Die radial verlaufenden zweiten Flanken F2 begünstigen den festen Sitz und verhindern dann ein Lockern, z.B. indem sie das Herausdrehen erschweren.

Die nicht radial verlaufende erste Flanke F1, F2' kann z.B. linear schräg zur radialen Richtung verlaufen, wie bei der durchgezogen gezeichneten Flanke F1 in Fig. 9. Sie kann aber auch konvex bogenförmig zur radialen Richtung verlaufen, wie bei der strichpunktiert gezeichneten Flanke F1' in Fig. 9.

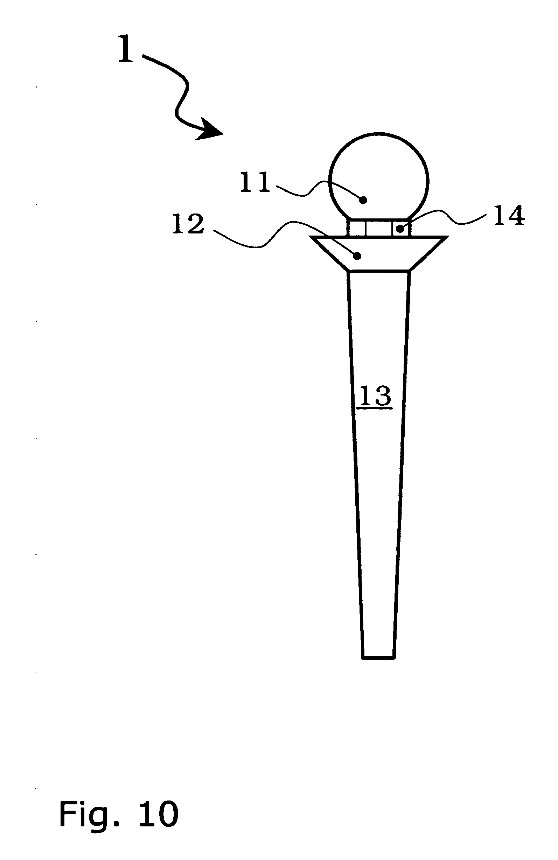

Die Fig. 10 zeigt eine Ausführungsform des Implantats, bei welchem der Kopf 11 nach Art eines Kugelabschnitts ausgebildet ist, welcher in seiner Ausdehnung eine Halbkugel übersteigt. Nach Art eines Schnappverschlusses können so Retentionskappen oder andere zahntechnische Mittel aufgenommen und gehaltert und fixiert werden. Zum Eindrehen ist in diesem Fall ein Hals 14 zwischen Kopf 11 und Schulter 12 vorgesehen - hier in Form eines Sechskants - um einem Eindrehwerkzeug als Angriff zu dienen.

### Bezugszeichenliste

**1** Kieferimplantat, Implantat
**11** Kopf, Kopfteil, Kopfbereich, Kopfabschnitt
**11d** distales Ende oder vom Fuß 13 abgewandter Bereich des Kopfes 11
**11p** proximales Ende oder vom Fuß 13 zugewandter Bereich des Kopfes
**12** Schulter, Schulterteil, Schulterbereich
**13** Fuß, Fußteil, Fußbereich, enossaler Gewindeteil
**13d** distales Endes oder vom Kopf 11 abgewandter Bereich des Fußes
**13p** proximales Ende oder dem Kopf 11 zugewandter Bereich des Fußes
**13-1** Abschnitt des Fußes
**13-2** Abschnitt des Fußes
**13-3** Abschnitt des Fußes
**14** Hals, Halsbereich, Halsabschnitt zwischen Schulter 12 und Kopf 11
**20** Kieferknochen
**30** Zahnfleisch
**40** Zahnersatz, zahntechnische Behandlungseinrichtung

**b11** obere Breite/oberer Durchmesser des Kopfes 11
**b12** untere Breite/unterer Durchmesser des Kopfes 11
**b21** obere Breite/oberer Durchmesser der Schulter 12
**b22** untere Breite/unterer Durchmesser der Schulter 12
**b31** obere Breite/oberer Durchmesser des Fußes 13
**b32** untere Breite/unterer Durchmesser des Fußes 13
**F1** erste oder linear schräg zur radialen Richtung verlaufende Flanke
**F1'** erste oder bogenförmig konvex zur radialen Richtung verlaufende Flanke
**F2** zweite oder radial verlaufende Flanke
**G** Gewinde, Gewindebereich
**G1** Gewindeteil, Gewindeabschnitt
**G2** Gewindeteil, Gewindeabschnitt
**G3** Gewindeteil, Gewindeabschnitt
**g1** Länge des Gewindabschnitts G1
**g2** Länge des Gewindabschnitts G2
**g3** Länge des Gewindabschnitts G3
**Gk** Gewindekante
**h1** Länge / Höhe des Kopfes 11
**h2** Länge / Höhe der Schulter 12
**h3** Länge / Höhe des Fußes 13
**X** Symmetrieachse, Längsachse. Erstreckungsachse des Fußes 13
**Y** Symmetrieachse, Längsachse, Erstreckungsachse des Kopfes 11

**α** Winkel zwischen den Symmetrieachsen X und Y

## Patentansprüche

1. Kieferimplantat (1),
- mit einem Kopf (11) zur Aufnahme eines Zahnersatzes (40) und/oder einer zahntechnischen Behandlungseinrichtung und
- mit einem Fuß (13), mit einem Gewinde (G, G1-3) zum Einschrauben in einen Kieferknochen (20),
- welches vollständig oder im Wesentlichen vollständig aus Zirkoniumdioxid (ZrO₂) ausgebildet ist und
- bei welchem der Fuß (13) mit dem Gewinde (G, G1-3) in einer Richtung von einem den Kopf (11) zugewandten Bereich (13p) zu einem dem Kopf (11) abgewandten Bereich (13d) hin konisch verjüngend ausgebildet ist, **dadurch gekennzeichnet, dass**
das Gewinde (G) vollständig oder abschnittsweise eine Gewindekante (Gk) aufweist, welche nach Art eines Sägezahngewindes ausgebildet ist mit einer nicht radial, insbesondere linear schräg oder konvex bogenförmig zur radialen Richtung, verlaufenden ersten Flanke (F1) und einer radial verlaufenden zweiten Flanke (F2) für jeden Zahn, und dass
die erste, nicht radial verlaufende Flanke (F1) jeweils in Eindrehrichtung des Gewindes (G) orientiert oder ausgerichtet ist und die zweite, radial verlaufende Flanke (F2) jeweils zur Eindrehrichtung des Gewindes (G) entgegen gesetzt orientiert oder ausgerichtet ist.

2. Kieferimplantat (1) nach Anspruch 1,
welches einteilig oder einstückig ausgebildet ist.

3. Kieferimplantat (1) nach einem der vorangehenden Ansprüche,
bei welchem der Fuß (13) eine Länge (h3) im Bereich von etwa 8 mm bis etwa 20 mm aufweist.

4. Kieferimplantat (1) nach einem der vorangehenden Ansprüche,
- bei welchem der Fuß (13) in dem dem Kopf (11) zugewandten Bereich (13p) eine Breite oder einen Durchmesser (b31) im Bereich von etwa 3 mm bis 5 mm aufweist, insbesondere einen Wert von 3,1 mm, von 3,7 mm, von 4,1 mm oder von 5,0 mm, und
- bei welchem der Fuß (13) in dem dem Kopf (11) abgewandten Bereich (13d) eine Breite oder einen Durchmesser (b32) im Bereich von etwa 1,6 mm bis etwa 2,5 mm aufweist.

5. Kieferimplantat (1) nach einem der vorangehenden Ansprüche, bei welchem das Gewinde (G, G1-3) eine Steigung aufweist im Bereich von etwa 0,53 Windungen/mm bis etwa 0,77 Windungen/mm, vorzugsweise im Bereich von etwa 0,61 Windungen/mm bis etwa 0,7 Windungen/mm.

6. Kieferimplantat (1) nach einem der vorangehenden Ansprüche, bei welchem der Fuß (13) und/oder das Gewinde (G, G1-3) eine vorgegebene und insbesondere erhöhte Rauhigkeit aufweist.

7. Kieferimplantat (1) nach einem der vorangehenden Ansprüche, bei welchem der Fuß (13) und/oder das Gewinde (G, G1-3) eine durch Sandstrahlen, insbesondere mit Zirkoniumdioxidsand einer vorgegebenen Korngröße, behandelte Oberfläche aufweisen.

8. Kieferimplantat (1) nach einem der vorangehenden Ansprüche, bei welchem der Fuß (13) und/oder das Gewinde (G, G1-3) auf deren Zirkoniumdioxidgrundmaterial an der Oberfläche eine Beschichtung aufweist, insbesondere eine Beschichtung mit oder aus mindestens einer Substanz aus der Gruppe, die gebildet wird von Polymeren, Silikaten, Metallen, Metalloxiden, Proteinen, Eigenproteinen oder deren Derivaten, Eigenblut oder dessen Komponenten oder Derivaten.

9. Kieferimplantat (1) nach einem der vorangehenden Ansprüche, bei welchem der Fuß (13) und/oder das Gewinde (G) mit einer Mehrzahl Fußabschnitte (13-1, 13-2, 13-3) und insbesondere das Gewinde (G) mit einer Mehrzahl, vorzugsweise unterschiedlicher Gewindeabschnitte (G1, G2, G3) des Gewindes (G) ausgebildet sind.

10. Kieferimplantat (1) nach einem der vorangehenden Ansprüche, bei welchem das Gewinde (G) pro Windung vier bis acht Zähne aufweist.

11. Kieferimplantat (1) nach einem der vorangehenden Ansprüche, bei welchem der Fuß (13) linear oder im Wesentlichen linear ausgebildet ist, insbesondere nach Art eines Kegelstumpfes, vorzugsweise mit kreisförmiger Grundfläche und/oder mit einer Symmetrieachse (X), welche mit der Längsachse des Kegelstumpfes zusammenfällt.

12. Kieferimplantat (1) nach einem der vorangehenden Ansprüche, bei welchem der Kopf (11) nach Art eines Zylinders oder eines Kegelstumpfes - vorzugsweise in senkrechter Art und Weise auf der Grundlage einer kreisförmigen oder elliptischen Grundfläche - oder nach Art eines Pyramidenstumpfes - vorzugsweise in senkrechter Art und Weise auf der Grundlage eines Polygons, vorzugsweise eines Rechtecks oder Quadrats - ausgebildet ist.

13. Kieferimplantat (1) nach einem der vorangehenden Ansprüche 1 bis 11,
bei welchem der Kopf (11) nach Art einer Kugel oder eines Kugelabschnitts, größer als eine Halbkugel ausgebildet ist, insbesondere zur Aufnahme von Rententionshülsen und/oder mit einem Kugeldurchmesser im Bereich von etwa 2 mm.

14. Kieferimplantat (1) nach einem der vorangehenden Ansprüche,
bei welchem der Kopf (11) eine Höhe oder Länge (h1) aufweist im Bereich von etwa 5 mm bis etwa 8 mm, vorzugsweise im Bereich von etwa 7 mm.

15. Kieferimplantat (1) nach einem der vorangehenden Ansprüche,
- bei welchem der Kopf (11) in einem dem Fuß (13) zugewandten Bereich (11p) einen Durchmesser oder eine Breite (b12) aufweist im Bereich von 4 mm und / oder
- bei welchem der Kopf (11) in einem dem Fuß (13) abgewandeten Bereich (11d) einen Durchmesser oder eine Breite aufweist im Bereich von 3 mm.

## Claims

1. Jaw implant (1),
- with a head (11) to receive a dental prosthesis (40) and/or a dental treatment device and
- with a foot (13), with a thread (G, G1-3) for screwing into a jaw bone (20),
- which is formed completely or essentially completely of zirconium dioxide (ZrO₂) and
- in which the foot (13) with the thread (G, G1-3) is configured tapering conically in a direction from a portion (13p) facing the head (11) to a portion (13d) remote from the head, ***characterised in that***
the thread (G) has a thread edge (Gk), which is completely or in portions formed in the manner of a saw tooth, with a first flank (F1) with a non-radial, in particular linear oblique or convex arc-shaped to the radial direction, first flank (F1) And a radial second flank (F2) for each tooth, and *that*
the first, non-radial flank (F1) is oriented or aligned respectively in the screwing-in direction of the thread (G) and the second, radial flank (F2) is oriented or aligned opposite to the screwing-in direction of the thread (G).

2. Jaw implant (1) in accordance with claim 1,
which is formed in one piece or integrally.

3. Jaw implant (1) in accordance with one of the preceding claims,
in which the foot has a length (h3) in the range from about 8 mm to about 20 mm.

4. Jaw implant (1) in accordance with one of the preceding claims,
- in which the foot (13) has a width or a diameter (b31) in the portion (13p) facing the head (11) in the range from about 3 mm to 5 mm, in particular a value of 3.1 mm, of 3.7 mm, of 4.1 mm or of 5.0 mm, and
- in which the foot (13) has a width or a diameter (b32) in the portion (13d) facing away from the head (11) in the range from about 1.6 mm to about 2.5 mm.

5. Jaw implant (1) in accordance with one of the preceding claims,
in which the thread (G, G1-3) has a pitch in the range from about 0.53 threads/mm to about 0.77 threads/mm, preferably in the range from about 0.61 threads/mm to about 0.7 threads/mm.

6. Jaw implant (1) in accordance with one of the preceding claims,
in which the foot (13) and/or the thread (G, G1-3) has a predetermined and in particular elevated roughness.

7. Jaw implant (1) in accordance with one of the preceding claims,
in which the foot (13) and/or the thread (G, G1-3) has a surface treated by sandblasting, in particular with zirconium dioxide sand of a predetermined grain size.

8. Jaw implant (1) in accordance with one of the preceding claims,
in which the foot (13) and/or the thread (G, G1-3) has a coating on its zirconium dioxide base material on the surface, in particular a coating with or without a substance from the group which is formed of polymers, silicates, metals, metal oxides, proteins, autologous proteins or their derivatives, autologous blood or its components or derivatives.

9. Jaw implant (1) in accordance with one of the preceding claims,
in which the foot (13) and/or the thread (G) is configured with a number of foot sections (13-1, 13-2, 13-3) and in particular the thread (G) is configured with a number of, preferably different, thread sections (G1, G2, G3) of the thread (G).

10. Jaw implant in accordance with one of the preceding claims,
in which the thread (G) has four to eight teeth per thread.

11. Jaw implant (1) in accordance with one of the preceding claims,
in which the foot (13) is configured linearly or essentially linearly, in particular in the manner of a truncated cone, preferably with circular basal surface and/or with an axis of symmetry (X), which coincides with the longitudinal axis of the truncated cone.

12. Jaw implant (1) in accordance with one of the preceding claims,
in which the head (11) is configured in the manner of a cylinder or a truncated cone - preferably in a vertical manner on the base of a circular or elliptical basal surface - or in the manner of a truncated pyramid - preferably in a vertical manner on the base of a polygon, preferably a rectangle or a square.

13. Jaw implant (1 in accordance with one of the preceding claims, 1 to 11,
in which the head (11) is configured in the manner of a sphere or a section of a sphere, larger than a hemisphere, in particular to receive retaining sleeves and/or with a spherical diameter in the region of about 2 mm.

14. Jaw implant (1) in accordance with one of the preceding claims,
in which the head (11) has a height or length (h1) in the range from about 5 mm to about 8 mm, preferably in the region of about 7 mm.

15. Jaw implant (1) in accordance with one of the preceding claims,
- in which the head (11) has a diameter or a width (b12) in a region (11p) facing the foot (13) in the region of 4 mm and/or
- in which the head (11) has a diameter or a width in a region (11d) facing away from the foot (13) in the region of 3 mm.

## Revendications

1. Implant dentaire (1)
- avec une tête (11) pour recevoir une prothèse dentaire (40) et/ou un dispositif de traitement dentaire, et
- avec une base (13) pourvue d'un filetage (G, G1-3), à visser dans un os maxillaire (20),
- qui se compose entièrement ou quasiment entièrement de dioxyde de zirconium (ZrO₂) et
- dans lequel la base (13) pourvue du filetage (G, G1-3) a une forme effilée conique dans un sens qui va d'une zone (13p) tournée vers la tête (11) vers une zone (13d) opposée à la tête (11),
**caractérisé en ce que** le filetage (G) présente entièrement ou par sections une arête de filetage (Gk) qui est formée à la manière d'un filetage en dents de scie, avec pour chaque dent un premier flanc (F1) qui s'étend non radialement, en particulier en biais linéairement ou avec une forme convexe par rapport au sens radial, et un second flanc (F2) qui s'étend radialement, et
**en ce que** le premier flanc (F1), qui s'étend non radialement, est orienté ou dirigé dans le sens de vissage du filetage (G) tandis que le second flanc (F2), qui s'étend radialement, est orienté ou dirigé à l'opposé du sens de vissage du filetage (G).

2. Implant dentaire (1) selon la revendication 1, qui est conçu en une seule partie ou d'une seule pièce.

3. Implant dentaire (1) selon l'une des revendications précédentes, sur lequel la base (13) présente une longueur (h3) située dans la plage d'environ 8 mm à environ 20 mm.

4. Implant dentaire (1) selon l'une des revendications précédentes,
- sur lequel la base (13) présente dans la zone (13p) tournée vers la tête (11) une largeur ou un diamètre (b31) situé dans la plage d'environ 3 mm à 5 mm, en particulier une valeur de 3,1 mm, de 3,7 mm, de 4,1 mm ou de 5,0 mm, et
- sur lequel la base (13) présente dans la zone (13d) opposée à la tête (11) une largeur ou un diamètre (b32) situé dans la plage d'environ 1,6 mm à environ 2,5 mm.

5. Implant dentaire (1) selon l'une des revendications précédentes, sur lequel le filetage (G, G1-3) présente un pas situé dans la plage d'environ 0,53 spire/mm à environ 0,77 spire/mm, de préférence dans la plage d'environ 0,61 spire/mm à environ 0,7 spire/mm.

6. Implant dentaire (1) selon l'une des revendications précédentes, sur lequel la base (13) et/ou le filetage (G, G1-3) présente une rugosité prédéfinie et de préférence accrue.

7. Implant dentaire (1) selon l'une des revendications précédentes, sur lequel la base (13) et/ou le filetage (G, G1-3) présentent une surface traitée par sablage, en particulier avec du sable de dioxyde de zirconium d'une granulométrie prédéfinie.

8. Implant dentaire (1) selon l'une des revendications précédentes, sur lequel la base (13) et/ou le filetage (G, G1-3) présentent sur leur matériau de base en dioxyde de zirconium, sur la surface, un revêtement, en particulier un revêtement pourvu ou composé d'au moins une substance du groupe qui est formé par des polymères, des silicates, des métaux, des oxydes de métal, des protéines, des protéines autologues ou leurs dérivés, du sang autologue ou ses composants ou dérivés.

9. Implant dentaire (1) selon l'une des revendications précédentes, sur lequel la base (13) et/ou le filetage (G) sont pourvus de plusieurs sections de base (13-1, 13-2, 13-3), et en particulier le filetage (G) est pourvu de plusieurs sections (G1, G2, G3) du filetage (G), de préférence différentes.

10. Implant dentaire (1) selon l'une des revendications précédentes, sur lequel le filetage (G) présente quatre à huit dents par spire.

11. Implant dentaire (1) selon l'une des revendications précédentes, sur lequel la base (13) a une forme linéaire ou quasiment linéaire, en particulier à la manière d'un cône tronqué, de préférence avec une surface de base circulaire et/ou un axe de symétrie (X) qui coïncide avec l'axe longitudinal du cône tronqué.

12. Implant dentaire (1) selon l'une des revendications précédentes, sur lequel la tête (11) a la forme d'un cylindre ou d'un cône tronqué - de préférence vertical sur la base d'une surface de base circulaire ou elliptique - ou d'une pyramide tronquée - de préférence verticale sur la base d'un polygone, de préférence d'un rectangle ou d'un carré.

13. Implant dentaire (1) selon l'une des revendications 1 à 11 précédentes, sur lequel la tête (11) a la forme d'une sphère ou d'un section de sphère plus grande qu'une demi-sphère, en particulier pour recevoir des douilles de retenue, et/ou présente un diamètre de sphère de l'ordre d'environ 2 mm.

14. Implant dentaire (1) selon l'une des revendications précédentes, sur lequel la tête (11) présente une hauteur ou une longueur (h1) située dans la plage d'environ 5 mm à environ 8 mm, de préférence de l'ordre d'environ 7 mm.

15. Implant dentaire (1) selon l'une des revendications précédentes,
- sur lequel la tête (11) présente, dans une zone (11p) tournée vers la base (13), un diamètre ou une largeur (b12) de l'ordre de 4 mm, et/ou
- sur lequel la tête (11) présente, dans une zone (11ld) opposée à la base (13), un diamètre ou une largeur de l'ordre de 3 mm.
